# EUROPEAN PATENT SPECIFICATION

(11) **EP 4 437 834 B1**
(45) Date of publication and mention of the grant of the patent: **05.08.2026**
(21) Application number: 24163411.2
(22) Date of filing: 14.03.2024
(51) Int. Cl.: A01G 3/053, A01D 34/90

(54) **HEDGE TRIMMER**
HECKENSCHERE
TAILLE-HAIE

(30) Priority: 29.03.2023 JP 2023054401
(43) Date of publication of application: 02.10.2024
(73) Proprietor: YAMABIKO CORPORATION, Ohme-shi, Tokyo 1988760 (JP)
(72) Inventor: KODAMA, Hisao, Ohme-shi, Tokyo 1988760 (JP); MAENO, Takeshi, Ohme-shi, Tokyo 1988760 (JP); MORISAKI, Yusuke, Ohme-shi, Tokyo 1988760 (JP); NAKAJIMA, Yoshie, Ohme-shi, Tokyo 1988760 (JP)
(74) Representative: Winter, Brandl - Partnerschaft mbB

(56) References cited:
- CN-A- 112 616 478
- JP-A- 2011 239 747
- JP-A- 2021 058 139
- US-A1- 2007 068 008
- US-A1- 2013 097 876
- US-B2- 6 942 416

## Description

### BACKGROUND

The present invention relates to a hedge trimmer.

### RELATED ART

A single-blade hedge trimmer designed for pruning hedges or shrubs is known (see JP 2021-58139 A). JP 2021 - 058 139 A and CN 112616478 A disclose a hedge trimmer including a main body, a blade unit attached to the main body, a front handle and a first trigger lever underneath the front handle.

The hedge trimmer of JP 2021-58139 A includes a main body case, a blade (cutter assembly) extending forward from a front part of the main body case, a motor housed in the main body case and allowing the blade to drive, a support portion connected to the blade, a front grip (front gripping portion) connected to the support portion, and a rear grip (rear gripping portion) connected to the main body case behind the front grip. Then, a trigger lever is provided directly below the front grip in a state where the hedge trimmer is placed on a mounting surface.

With such a hedge trimmer, if a pruning point is far away, it is necessary to operate the trigger lever with an arm extended. In this case, a finger needs to be extended to reach the trigger lever directly below the front grip.

However, prolonged operation with the hedge trimmer under such a condition may lead to severe fatigue, causing the finger to unexpectedly leave the trigger lever and the blade to stop driving.

In view of the above circumstances, the present invention aims to provide a hedge trimmer that enhances operability. This object is solved by the subject matter of the independent claim. Further aspects are disclosed in the dependent claims.

According to the present invention, a hedge trimmer comprising a cutter assembly and a drive operating portion for driving and operating the cutter assembly is provided. The drive operating portion in the hedge trimmer includes a body with a power source, a front handle, and a rear handle. The front handle includes a rod-shaped front gripping portion provided to protrude laterally of the cutter assembly and a trigger lever displaceably mounted on the front gripping portion, allowing and releasing transmission of drive power from the power source to the cutter assembly. When the hedge trimmer is viewed laterally in a state where a thickness direction of the cutter assembly being a vertical direction, the trigger lever is arranged to protrude from the front gripping portion in a direction inclined forward to the vertical direction on a lower side of the vertical direction. In a plan view of the hedge trimmer, the central axis of the front gripping portion is inclined with respect to the longitudinal direction of the cutter assembly in such a manner that an end of the front gripping portion on an opposite side of the cutter assembly is located on a rear side than an end of the front gripping portion on a side of the cutter assembly. The rear handle includes a rod - shaped rear gripping portion provided so as to incline along the longitudinal direction of the cutter assembly, and in a plan view of the hedge trimmer, the central axis of the front gripping portion and a central axis of the rear gripping portion are arranged to be approximately parallel.

According to such a configuration the trigger lever is easy to operate even when an arm is extended, resulting in excellent operability.

### BRIEF DESCRIPTION OF DRAWINGS

FIG. 1 is an overall perspective view of a hedge trimmer as viewed from above.
FIG. 2 is a plan view of a hedge trimmer as viewed from below.
FIG. 3 is an enlarged perspective view showing a front handle.
FIG. 4 is a cross-sectional view taken along line A-A in FIG. 3.

### DETAILED DESCRIPTION

Hereinafter, an embodiment of the present invention will be described with reference to drawings. Various features shown in the following embodiment may be combined with each other.

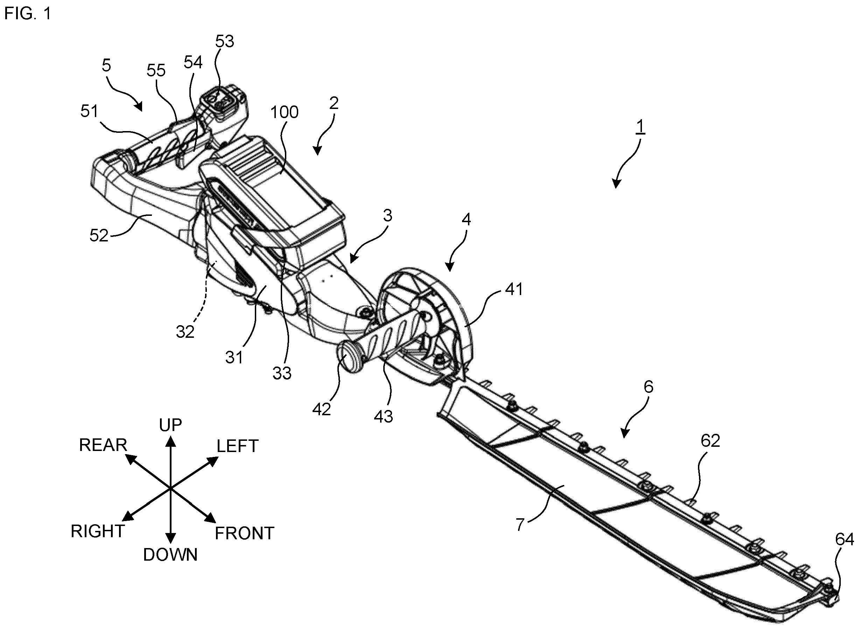

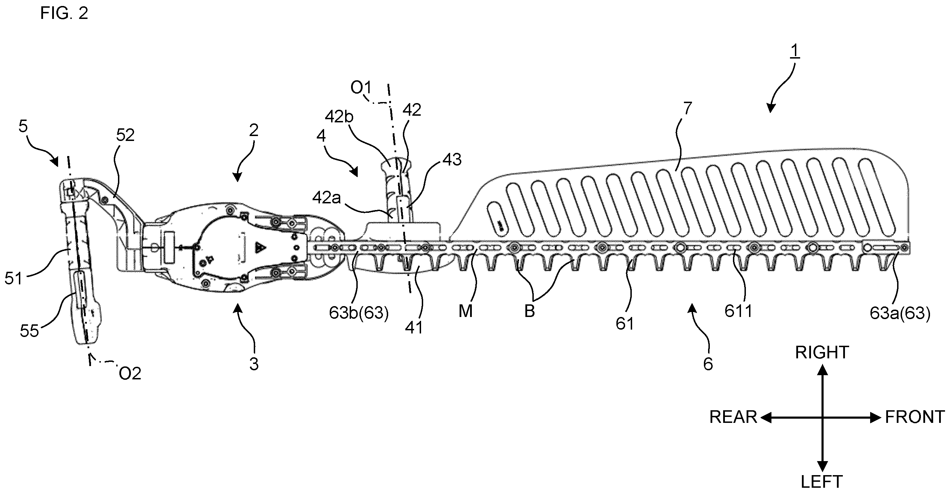

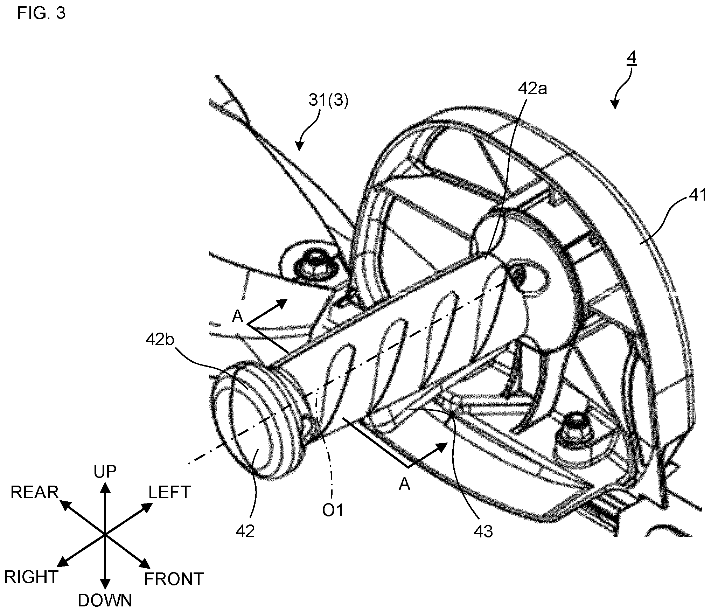

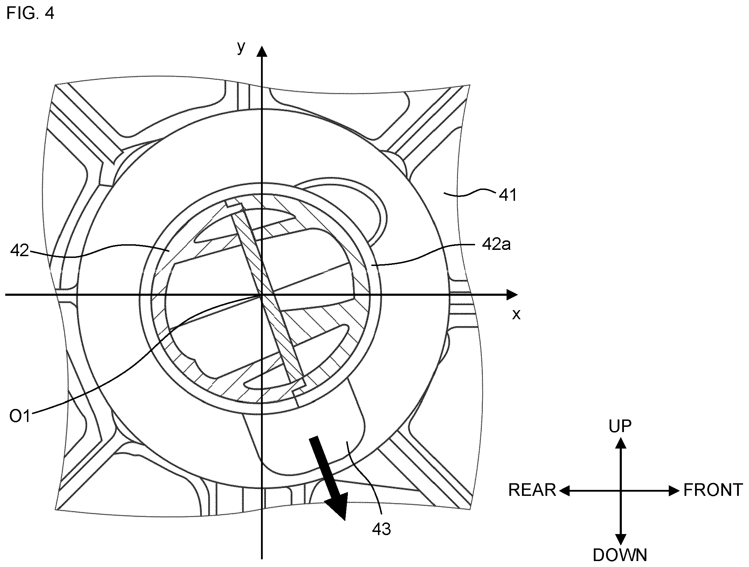

FIG. 1 is an overall perspective view of a hedge trimmer as viewed from above. FIG. 2 is a plan view of the hedge trimmer as viewed from below. FIG. 3 is an enlarged perspective view showing a front handle. FIG. 4 is a cross-sectional view taken along line A-A in FIG. 3.

Note that directions of the hedge trimmer and each component configuring the hedge trimmer are defined based on "up," "down," "left," "right," "front," and "rear" shown in the drawings.

The hedge trimmer 1 shown in FIG. 1 is a hand-held compact cutting machine (driving apparatus) used for trimming or pruning hedges or shrubs, and is electrically driven with a battery 100 attached thereto.

The hedge trimmer 1 comprises a cutter assembly 6 and a drive operating portion 2 for driving and operating the cutter assembly.

The drive operating portion 2 includes a main body 3, a front handle 4, and a rear handle 5. The front handle 4 and the rear handle 5 may be grasped by a hand to operate the hedge trimmer 1.

In the present embodiment, an apparatus body is configured by the main body 3 and the cutter assembly 6. That is, the apparatus body has the cutter assembly 6 as a pruning portion for mowing or cutting an object.

On a front side of the main body 3, a cutter assembly 6 is provided, and on a right side of the cutter assembly 6, a receiving plate 7 is provided to receive the object that has been cut.

The cutter assembly (cutter assembly for hedge trimmer) 6 includes a lower cutter 61, an upper cutter 62, a lower cutter support 63 and an upper cutter support 64. The lower cutter 61 and the upper cutter 62 are superimposed on each other and are provided to be relatively slidable along a longitudinal direction (front-rear direction).

It should be noted that a configuration of the lower cutter 61 and a configuration of the upper cutter 62 are substantially identical.

The lower cutter support 63 is provided on a lower side of the lower cutter 61. From a viewpoint of weight reduction, the lower cutter support 63 is divided into two parts, a front support 63a and a rear support 63b, as shown in FIG. 2. In other words, the cutter assembly 6 has the lower cutter support 63 provided on a side of the lower cutter 61 opposite to the upper cutter 62, covering a part of the lower cutter 61.

On the other hand, the upper cutter support 64 is provided on an upper side of the upper cutter 62. Further, the upper cutter support 64 extends along the longitudinal direction (front-rear direction) of the cutter assembly 6.

Each of the lower cutter 61 and the upper cutter 62 has a cutter body M and two or more blade portions B protruding laterally from the cutter body M, as shown in FIG. 2. In the present embodiment, the cutter assembly 6 has a configuration where each of the lower cutter 61 and the upper cutter 62 is single-bladed, with two or more blade portions B protruding only on one side of the cutter body M.

A long hole 611 is formed in the cutter body M of the lower cutter 61, passing through the cutter body M in a thickness direction thereof and extending in a longitudinal direction. Further, a long hole is also formed in the cutter body M of the lower cutter 61, passing through the cutter body M in a thickness direction thereof and extending in a longitudinal direction (not shown). Forming such long holes allows for weight reduction for each of the lower cutter 61 and the upper cutter 62.

Each of the lower cutter 61 and the upper cutter 62 may have a double-edged configuration with two or more blades B protruding on both sides of the cutter body M.

The main body 3 includes a main body case 31 and an electric motor 32 housed in the main body case 31.

The main body case 31 is a resin-made box, and a top surface is inclined with respect to a bottom surface. The top surface of the main body case 31 inclines downward from a rear side to a front side. In other words, the main body case 31 is formed with a front part lower than a rear part. Thus, the main body case 31 is formed in an approximately triangular shape as viewed laterally.

The electric motor (power source) 32 is connected to the cutter assembly 6 through a drive transmission mechanism (not shown) and allows the cutter assembly 6 to drive. The cutter assembly 6 comprises the lower cutter 61 and the upper cutter 62, and the electric motor 32 allows the lower cutter 61 and the upper cutter 62 to relatively slide along a longitudinal direction.

On the top surface of the main body case 31, a battery mounting portion 33 is provided for mounting the battery 100. The battery mounting portion 33 is inclining downward from a rear part to a front part in accordance with the top surface of the main body case 31.

The battery 100 is a common battery with a rectangular case extending in a front-rear direction and housing two or more lithium-ion battery cells to achieve predetermined output.

Although not shown, at a rear end of a lower surface of the battery 100, there is an engagement portion protruding to engage with the battery mounting portion 33.

When mounting the battery 100 on the battery mounting portion 33, the lower part of the battery 100 is fitted into the battery mounting portion 33 while allowing the battery 100 to slide from rear to front with respect to the battery mounting portion 33. As a front end of the battery 100 is moved to a position supported by a front end of the battery mounting portion 33, the engagement portion of the battery 100 engages with the battery mounting portion 33 and the battery 100 is fixed to the battery mounting portion 33.

The battery 100 mounted on the battery mounting portion 33 is inclined to slope downward from a rear side to a front side, and a front part is arranged lower than a rear part.

On a top surface of the battery mounting portion 33, a metallic connection terminal (not shown) is provided. The connection terminal is electrically connected to a control board (not shown) or the electric motor 32. Then, by electrically connecting a connection terminal of the battery 100 to the connection terminal of the battery mounting portion 33, power is supplied from the battery 100 to the control board or the electric motor 32.

When removing the battery 100 from the battery mounting portion 33, operating a connecting lever (not shown) provided at a rear end of the battery 100 releases an engagement state between the battery mounting portion 33 and the engagement portion, which allows the battery 100 to slide rearward with respect to the battery mounting portion 33.

The front handle 4 is provided on a front side of the main body case 31 (main body 3), as shown in FIG. 1. The front handle 4 is provided between the main body 3 and the receiving plate 7.

The front handle 4 includes a plate-shaped support portion 41 arranged along an up-down direction, a rod-shaped front gripping portion 42 provided to protrude from the support portion 41 to a right side (a side of the cutter assembly 6), and a trigger lever 43 provided on a lower side of the front gripping portion 42. Then, the support portion 41 is fixed to the cutter assembly 6.

The trigger lever 43 has an elongated shape and is arranged in such a manner that a longitudinal direction thereof is along a central axis O1 of the front gripping portion 42, as shown in FIG. 2. Then, the trigger lever 43 is rotatably (displaceably) mounted on the front gripping portion 42 with a left side end as a rotational center.

Further, the rear handle 5 is provided at a rear side of the main body case 31 (main body 3). As shown in FIG. 1, the rear handle 5 includes a rod-shaped rear gripping portion 51 provided in a left-right direction (inclined along the longitudinal direction of the cutter assembly 6) and a connecting portion 52 connecting the rear gripping portion 51 and the main body 3. A power switch 53 is provided at a left end of the rear gripping portion 51.

Furthermore, on a lower side of the rear gripping portion 51, there is a throttle lever 54 provided as an operation means for allowing the cutter assembly 6 to drive, and on an upper side of the rear gripping portion 51, there is a lock release lever 55 provided to prevent and release a displacement (operation) of the throttle lever 54.

When an operator performs work on an object, by gripping the front gripping portion 42 and the rear gripping portion 51 of the hedge trimmer 1, holding the trigger lever 43 and the lock release lever 55, and operating the throttle lever 54 with a finger holding the rear gripping portion 51, the cutter assembly 6 may be allowed to drive.

Specifically, by gripping the trigger lever 43 while gripping the front gripping portion 42 and operating the throttle lever 54 provided on a lower side of the rear gripping portion 51, the battery 100 and the electric motor 32 are electrically connected to drive the electric motor 32. This allows a drive force from the electric motor 32 to be transmitted to the cutter assembly 6. On the other hand, by releasing the trigger lever 43, electrical connection between the battery 100 and the electric motor 32 is released and the electric motor 32 is stopped, thereby disabling transmission of the drive force from the electric motor 32 to the cutter assembly 6.

When the hedge trimmer 1 is viewed laterally in a state where a thickness direction of the cutter assembly 6 being a vertical direction (up-down direction), the trigger lever 43 is arranged to protrude from the front gripping portion 42 in a direction inclined to a front side with respect to the vertical direction. In other words, as shown in FIG. 4, when defining a plane coordinate with an axis along the longitudinal direction of the cutter assembly 6 as an x-axis and an axis orthogonal to the x-axis as a y-axis in such a manner that the central axis O1 of the front gripping portion 42 passes through an origin, the trigger lever 43 is arranged so as to protrude towards a fourth quadrant from the front gripping portion 42.

According to such a configuration, when a pruning point is far away, although it is necessary to grip the front gripping portion 42 with an arm extended and grip the trigger lever 43 with a finger, it becomes easier to reach the trigger lever 43 with a finger without performing a twisting motion of a wrist, such as wrapping the wrist towards a front side with respect to the front gripping portion 42. That is, this allows for improved operability of the trigger lever 43, thereby reducing fatigue for the operator.

An angle formed between a direction in which the trigger lever 43 protrudes (inclining towards the front side) and the vertical direction is preferably about 10° or more and 45° or less.

As mentioned above, the trigger lever 43 may be configured to electrically connect and disconnect (cut off) the battery 100 and the electric motor 32, as well as to activate and deactivate the drive transmission mechanism that transmits the drive power of the electric motor 32 to the cutter assembly 6.

As shown in FIG. 2, in a plan view of the hedge trimmer 1, the central axis O1 of the front gripping portion 42 is inclined with respect to the longitudinal direction of the cutter assembly 6 in such a manner that an outer (a side far from the cutter assembly 6) end 42b of the front gripping portion 42 is located on a rear side than on an inner (a side close to the cutter assembly 6) end 42a of the front gripping portion 42. This configuration eliminates the need for twisting the wrist when gripping the front gripping portion 42, thereby further reducing fatigue for the operator.

An angle between the central axis O1 of the front gripping portion 42 and the longitudinal direction of the cutter assembly 6 is preferably about 80° or more and 88° or less.

As shown in FIG. 2, in a plan view of the hedge trimmer 1, the central axis O1 of the front gripping portion 42 and a central axis O2 of the rear gripping portion 51 are arranged to be approximately parallel. With such a configuration, it becomes easier to enhance sense of unity of the operator with the hedge trimmer 1 during operation and reduce massive feeling when the operator lifts the hedge trimmer 1.

Further, as shown in FIG. 2, in a plan view of the hedge trimmer 1, the central axis O1 of the front gripping portion 42 is inclined towards the rear gripping portion 51 (rear side) with respect to the longitudinal direction of the cutter assembly 6, the central axis O2 of the rear gripping portion 51 is inclined towards the front gripping portion 42 (front side) with respect to the longitudinal direction of the cutter assembly 6, and the central axis O1 of the front gripping portion 42 and the central axis O2 of the rear gripping portion 51 are arranged to be approximately parallel. According to such a configuration, it becomes easier to reduce massive feeling when the operator lifts the hedge trimmer 1.

The hedge trimmer 1 as described above has excellent operability because the trigger lever 43 can be easily operated even with an arm extended.

It should be noted that instead of the electric motor 32, an engine may be applied as the power source for the hedge trimmer 1.

Further, the configuration of the trigger lever 43 is not limited to being rotatably mounted on the front gripping portion 42, any configuration may be sufficient as long as displaceably provided on the front gripping portion 42. For instance, a button may be retractably provided on the front gripping portion 42 in a direction perpendicular to the central axis O1 of the front gripping portion 42, or a slide lever may be slidably provided on the front gripping portion 42 in a direction along the central axis O1 of the front gripping portion 42.

Finally, although various embodiments of the present invention have been described, these are presented as examples and are not intended to limit the scope of the present invention. Other novel embodiments may be implemented in various forms, and various omissions, substitutions, and modification may be made within the scope of invention without departing from the scope of the claims. The embodiments or modifications thereof are included in the scope of the present invention, as well as within the scope of the invention and equivalents thereof recited in the claims.

### REFERENCE SIGNS LIST

1: Hedge trimmer
2: Drive operating portion
3: Main body
31: Main body case
32: Electric motor
33: Battery mounting portion
4: Front handle
41: Support portion
42: Front gripping portion
42a: End
42b: End
43: Trigger lever
5: Rear handle
51: Rear gripping portion
52: Connecting portion
53: Power switch
54: Throttle lever
55: Lock release lever
6: Cutter assembly
61: Lower cutter
611: Long hole
62: Upper cutter
63: Lower cutter support
63a: Front support
63b: Rear support
64: Upper cutter support
B: Blade portion
M: Cutter body
7: Receiving plate
O1: Central axis
O2: Central axis
100: Battery

## Claims

1. A hedge trimmer (1) comprising a cutter assembly (6) and a drive operating portion (2) for driving and operating the cutter assembly (6), wherein:
the drive operating portion (2) includes a body (3) with a power source (32), a front handle (4), and a rear handle (5),
the front handle (4) includes a rod-shaped front gripping portion (42) provided to protrude laterally with regard to a longitudinal direction of the cutter assembly (6) and a trigger lever (43) displaceably mounted on the front gripping portion (42), allowing and releasing transmission of drive power from the power source (32) to the cutter assembly (6),
the trigger lever (43) has an elongated shape, is arranged in such a manner that a longitudinal direction thereof is along a central axis (O1) of the front gripping portion (42), and is arranged on a lower side of the front gripping portion (42), and
when the hedge trimmer (1) is viewed laterally with regard to a longitudinal direction of the hedge trimmer (1), the trigger lever (43) is arranged to protrude from the front gripping portion (42) in a direction inclined forward to a front side of the hedge trimmer (1), wherein
in a plan view of the hedge trimmer (1), the central axis (O1) of the front gripping portion (42) is inclined with respect to the longitudinal direction of the cutter assembly (6) in such a manner that an end (42b) of the front gripping portion (42) on an opposite side of the cutter assembly (6) is located on a rear side than an end (42a) of the front gripping portion (42) on a side of the cutter assembly (6),
the rear handle (5) includes a rod - shaped rear gripping portion (51) provided so as to incline along the longitudinal direction of the cutter assembly (6), and
in a plan view of the hedge trimmer (1), the central axis (O1) of the front gripping portion (42) and a central axis (O2) of the rear gripping portion (51) are arranged to be approximately parallel.

## Patentansprüche

1. Heckenschere (1) mit einer Schneidanordnung (6) und einem Antriebsabschnitt (2) zum Antreiben und Bedienen der Schneidanordnung (6), wobei:
der Antriebsabschnitt (2) ein Gehäuse (3) mit einer Stromquelle (32), einen vorderen Griff (4) und einen hinteren Griff (5) aufweist,
der vordere Griff (4) einen stabförmigen vorderen Griffabschnitt (42), der so vorgesehen ist, dass er seitlich in Bezug auf eine Längsrichtung der Schneidanordnung (6) hervorsteht, sowie einen Schalthebel (43) aufweist, der verschiebbar am vorderen Griffabschnitt (42) montiert ist und die Übertragung von Antriebskraft von der Stromquelle (32) auf die Schneidanordnung (6) ermöglicht und unterbricht,
der Schalthebel (43) eine längliche Form aufweist, so angeordnet ist, dass seine Längsrichtung entlang einer Mittelachse (O1) des vorderen Griffabschnitts (42) verläuft, und an einer Unterseite des vorderen Griffabschnitts (42) angeordnet ist, und
wenn die Heckenschere (1) seitlich in Bezug auf eine Längsrichtung der Heckenschere (1) betrachtet wird, der Schalthebel (43) so angeordnet ist, dass er aus dem vorderen Griffabschnitt (42) in einer Richtung herausragt, die nach vorne zur Vorderseite der Heckenschere (1) geneigt ist, wobei
in einer Draufsicht auf die Heckenschere (1) die Mittelachse (O1) des vorderen Griffabschnitts (42) in Bezug auf die Längsrichtung der Schneidanordnung (6) derart geneigt ist, dass sich ein Ende (42b) des vorderen Griffabschnitts (42) auf der der Schneidanordnung (6) gegenüberliegenden Seite weiter hinten befindet als ein Ende (42a) des vorderen Griffabschnitts (42) auf einer Seite der Schneidanordnung (6),
der hintere Griff (5) einen stabförmigen hinteren Griffabschnitt (51) vorsieht, der so angeordnet ist, dass er entlang der Längsrichtung der Schneidanordnung (6) geneigt ist, und
in einer Draufsicht auf die Heckenschere (1) die Mittelachse (O1) des vorderen Griffabschnitts (42) und eine Mittelachse (O2) des hinteren Griffabschnitts (51) so angeordnet sind, dass sie annähernd parallel zueinander verlaufen.

## Revendications

1. Taille-haie (1) comprenant un ensemble de coupe (6) et une partie de commande d'entraînement (2) pour entraîner et faire fonctionner l'ensemble de coupe (6), dans lequel :
la partie de commande d'entraînement (2) inclut un corps (3) avec une source d'énergie (32), une poignée avant (4) et une poignée arrière (5),
la poignée avant (4) inclut une partie de préhension avant en forme de tige (42) conçue pour faire saillie latéralement par rapport à une direction longitudinale de l'ensemble de coupe (6) et un levier de déclenchement (43) monté de manière déplaçable sur la partie de préhension avant (42), permettant et libérant la transmission d'énergie d'entraînement de la source d'énergie (32) à l'ensemble de coupe (6),
le levier de déclenchement (43) présente une forme allongée, est agencé de telle sorte que sa direction longitudinale est alignée sur un axe central (01) de la partie de préhension avant (42), et est agencé sur un côté inférieur de la partie de préhension avant (42), et
lorsque le taille-haie (1) est vu latéralement par rapport à une direction longitudinale du taille-haie (1), le levier de déclenchement (43) est agencé de manière à faire saillie de la partie de préhension avant (42) dans une direction inclinée vers l'avant, du côté avant du taille-haie (1), dans lequel
dans une vue en plan du taille-haie (1), l'axe central (01) de la partie de préhension avant (42) est incliné par rapport à la direction longitudinale de l'ensemble de coupe (6) de telle sorte qu'une extrémité (42b) de la partie de préhension avant (42) sur un côté opposé de l'ensemble de coupe (6) soit située sur un côté arrière d'une extrémité (42a) de la partie de préhension avant (42) sur un côté de l'ensemble de coupe (6),
la poignée arrière (5) inclut une partie de préhension arrière en forme de tige (51) conçue pour s'incliner dans la direction longitudinale de l'ensemble de coupe (6), et
dans une vue en plan du taille-haie (1), l'axe central (01) de la partie de préhension avant (42) et un axe central (O2) de la partie de préhension arrière (51) sont agencés de manière à être approximativement parallèles.
